# EUROPEAN PATENT APPLICATION

(11) **EP 4 425 727 A1**
(43) Date of publication of application: **04.09.2024**
(21) Application number: 22885083.0
(22) Date of filing: 27.05.2022
(51) Int. Cl.: H02G 3/08, H02M 7/00

(54) **JUNCTION BOX AND INVERTER**

(30) Priority: 28.10.2021 CN 202122613310 U
(71) Applicant: Sungrow Power Supply Co., Ltd., Hefei, Anhui 230088 (CN)
(72) Inventor: CHEN, Lin, Hefei, Anhui 230088 (CN); LI, Yonghong, Hefei, Anhui 230088 (CN); LIU, Long, Hefei, Anhui 230088 (CN); XING, Jun, Hefei, Anhui 230088 (CN)
(74) Representative: Zacco Norway AS
(86) International application number: PCT/CN2022/095528
(87) International publication number: WO 2023/071173

(57) **Abstract**

A junction box and an inverter, relating to the technical field of electronic power supplies. The junction box (100) comprises a base (1), a box body (3), and a locking assembly (2), the base (1) being used to be fixed at a position to be installed, the box body (3) being connected to the base (1), the locking assembly (2) being slidably connected to the base (1), and the locking assembly (2) being provided with a guide clamping groove (2111), the guide clamping groove (2111) being able to slide laterally along the box body (3), so that the box body (3) is clamped into the guide clamping groove (2111). When it is necessary to mount the box body (3) onto the base (1), it is only necessary to place the box body (3) below the base (1) along the guide clamping groove (2111), and then cause the guide clamping groove (2111) to slide along a side direction of the box body (3), so that stable mounting of the box body (3) and the base (1) in a narrow installation space can be achieved; in addition, the structure is simple and easy to operate. The inverter, by means of arranging the junction box (100) on the inverter body (200), facilitates connection of a cable to the inverter body (200) in a narrow space.

## Description

This application claims the benefit of priority to Chinese Patent Application No. 202122613310.9, titled "JUNCTION BOX AND INVERTER", filed with the China National Intellectual Property Administration on October 28, 2021, which is incorporated herein by reference in its entirety.

### FIELD

The present application relates to the technical field of electronic power supplies, and in particular to a junction box and an inverter.

### BACKGROUND

When the existing inverter is wired with an external device, it is necessary to mount a junction box onto the inverter in order to increase the protection for the cable and facilitate the wiring of the cable. In some cases, the installation space for the junction box is relatively small. Further, there is one type of junction box on the current market that needs to be fixed to the wall body or the like by screws. After the cable in the junction box is connected to an external cable, the box body of the junction box needs to be fixed to the wall body by a screwdriver or an electric drill, which requires a relatively large space and is inconvenient to install or detach. There is another type of junction box that is fixed to the box body by means of a rotary buckle. Although the installation of the box body of this type of junction box does not require tools, the rotation of the buckle requires a larger space, and it is difficult to extract and fix the junction box when the junction box is used in a relatively narrow space.

In addition, there is another type of junction box that is provided with a vertical guide block and a spring latch on a side wall of its box cover. Correspondingly, its box body is provided with a vertical guide groove and a latch groove. During installation, it is necessary to push the spring latch so that the spring is in a compressed state. At the same time, the guide block on the box cover is aligned with and inserted into the guide groove on the box body. After the box body is in contact with the box cover, the spring latch is released, and the latch is pushed into the latch hole on the box body under the elastic force of the spring returning from the compressed state to the normal state, thus locking the box cover to the box body. However, this type of junction box is structurally complex and costly.

Therefore, it is urgent to develop a junction box that is simple in structure, easy to operate and convenient to install in a narrow space and to develop an inverter having the same effect.

### SUMMARY

An object of the present application is to provide a junction box that can be quickly mounted in a relatively small space, and has a simple structure and low cost, and is convenient to install.

Another object of the present application is to provide an inverter that allows a connection between the cable and the inverter body in a relatively small space. In order to achieve this object, the following technical solutions are provided according to the present application.

A junction box includes:
a base;
a box body provided with a clamping post; and
a locking assembly slidably connected to the base, where the locking assembly is provided with a guide clamping groove, and the locking assembly is able to slide laterally along the box body, so as to clamp the box body into the guide clamping groove.

In an embodiment, the guide clamping groove is L-shaped, and the guide clamping groove includes a guide portion and a clamping portion that are communicated with each other. The clamping post can pass through the guide portion and be clamped into the clamping portion.

In an embodiment, multiple guide clamping grooves are provided, and the multiple guide clamping grooves are spaced apart on the locking assembly.

In an embodiment, an inclined guide surface is provided at an opening of the guide portion and/or at a joint between the guide portion and the clamping portion.

In an embodiment, the locking assembly is provided with a mounting slide groove that extends laterally along the box body. The junction box further includes a fastener that is configured to pass through the mounting slide groove so as to slidably connect the locking assembly to the base.

In an embodiment, multiple mounting slide grooves are provided, and the multiple mounting slide grooves are spaced apart on the locking assembly.

In an embodiment, the locking assembly includes: a locking member and a reset member. The locking member is provided with the guide clamping groove. One end of the reset member is connected to the locking member, and the reset member is configured to reset the locking member, so as to clamp the box body into the guide clamping groove.

In an embodiment, the locking member includes two opposite side plates and a connecting plate, two ends of the connecting plate are respectively connected to an end of each of the two side plates, and the box body is located between the two side plates. Each of the two side plates is provided with the guide clamping groove, and two ends of the reset member are respectively connected to the connecting plate and the base.

In an embodiment, the locking assembly further includes a fixing member that is configured for fixing the locking member to the box body when the box body is clamped into the guide clamping groove.

In an embodiment, the locking assembly is provided with a handle.

In an embodiment, the junction box further includes a sealing ring, wherein a first annular sealing groove is provided on an upper end face of the base, and a second annular sealing groove is provided on one of a lower end face of the base and an upper end face of the box body, and the sealing ring is placed in the first annular sealing groove and the second annular sealing groove. When the base is fixed at the installation position, the base presses against the sealing ring in the first annular sealing groove. When the box body is clamped into the guide clamping groove, the box body presses against the sealing ring in the second annular sealing groove.

In an embodiment, the base is provided with a guide wall in a circumferential direction, and the guide wall is configured to guide the box body to press against the sealing ring.

An inverter includes an inverter body and a junction box, wherein the junction box is provided on the inverter body.

The present application has the following beneficial effects.

The junction box provided according to the application includes a base, a box body and a locking assembly. The base can be mounted on the inverter body, the locking assembly is connected to the base and is able to move with respect to the base, and the locking assembly is provided with a guide clamping groove. When the box body is mounted onto the base, it is only required to place the box body below the base along the guide clamping groove, and then to move the guide clamping groove in a first direction with respect to the box body, so that stable mounting of the box body and the base in a narrow installation space can be achieved. In addition, the junction box has a simple structure, and is easy to operate.

The present application further provides an inverter, which includes an inverter body and the junction box, wherein the junction box is mounted on the inverter body to facilitate the connection of the cable to the inverter body in a narrow space.

### BRIEF DESCRIPTION OF THE DRAWINGS

In order to more clearly describe the technical solutions in the embodiments of the present application, drawings to be used in the description of the embodiments of the present application are briefly described hereinafter. It is apparent that the drawings described below show merely some embodiments of the present application, and those skilled in the art may obtain other drawings according to the embodiments of the present application and the provided drawings without any creative effort.
Fig. 1 is a schematic structural view of an inverter provided according to a first embodiment of the present application;
Fig. 2 is an exploded view of a junction box provided according to the first embodiment of the present application;
Fig. 3 is a first schematic structural view of a base provided according to the first embodiment of the present application;
Fig. 4 is a second schematic structural view of the base provided according to the first embodiment of the present application;
Fig. 5 is a schematic structural view of a locking assembly provided according to the first embodiment of the present application;
Fig. 6 is a schematic structural view of a locking member provided according to the first embodiment of the present application;
Fig. 7 is a schematic structural view of the junction box provided according to the first embodiment of the present application in a locked state;
Fig. 8 is a first schematic structural view of the junction box provided according to a second embodiment of the present application; and
Fig. 9 is a second schematic structural view of the junction box provided according to the second embodiment of the present application.

Reference numerals in the drawings are as follows:
1 base; 11 base mounting hole; 12 first annular sealing groove; 13 locking assembly mounting portion; 131 side mounting hole; 14 guide wall; 15 second annular sealing groove; 16 through hole; 17 first clamping post;
2 locking assembly; 21 locking member; 211 side plate; 2111 guide clamping groove; 21111 guide portion; 211111 inclined guide surface; 21112 clamping portion; 2112 mounting slide groove; 212 connecting plate; 2121 handle; 2122 extension portion; 21221 fixing member mounting hole; 2123 second clamping post; 22 fixing member; 23 reset member;
3 box body; 31 clamping post;
4 fastener; 41 limit portion; 42 lead portion; 421 sliding portion; 422 connecting portion;
5 sealing ring;
100 junction box;
200 inverter body.

### DETAILED DESCRIPTION OF THE EMBODIMENTS

Hereinafter, the present application is further described in detail in conjunction with drawings and embodiments. It should be understood that the embodiments described herein are only for explaining the present application, rather than limiting the present application. In addition, it should be noted that, for ease of description, only some of structures related to the present application, rather than all of the structures, are shown in the drawings.

In the description of the present application, unless otherwise explicitly specified and defined, terms such as "link", "connect", and "fix" should be understood in a broad sense. For example, the terms may imply a fixed connection, a detachable connection, or an integral connection; a mechanical connection, or an electrical connection; a direct connection or an indirect connection through an intermediate media; an internal communication inside two elements or the interaction relationship between the two elements. For those of ordinary skill in the art, the specific meanings of the terms in the present application may be understood in the light of specific circumstances.

In the present application, unless otherwise explicitly defined and limited, the first feature being located "above" or "below" the second feature may include direct contact between the first and second features, and may also include indirect contact between the first and second features via another feature between them. Furthermore, the expression that the first feature is located "above", "over" and "on" the second feature includes that the first feature is located directly above and obliquely above the second feature, or simply indicates that the height of the first feature from a horizontal surface is greater than that of the second feature. The expression that the first feature is located "below", "under" and "beneath" the second feature includes that the first feature is located directly below and obliquely below the second feature, or simply indicates that the height of the first feature from a horizontal surface is smaller than that of the second feature.

In the description of the embodiments, the terms "top", "bottom", "right" and the like used for describing orientations or positional relationships are used in accordance with the orientations or positional relationships shown in the drawings, and are only for ease of description and simplification of operation, rather than for indicating or implying that a specific device or element must have a specific orientation, or be constructed and operated in a specific orientation. Therefore, these terms should not be understood as limitations to the present application. In addition, the terms "first" and "second" are merely used to distinguish two elements in description, and have no special meaning.

### First Embodiment

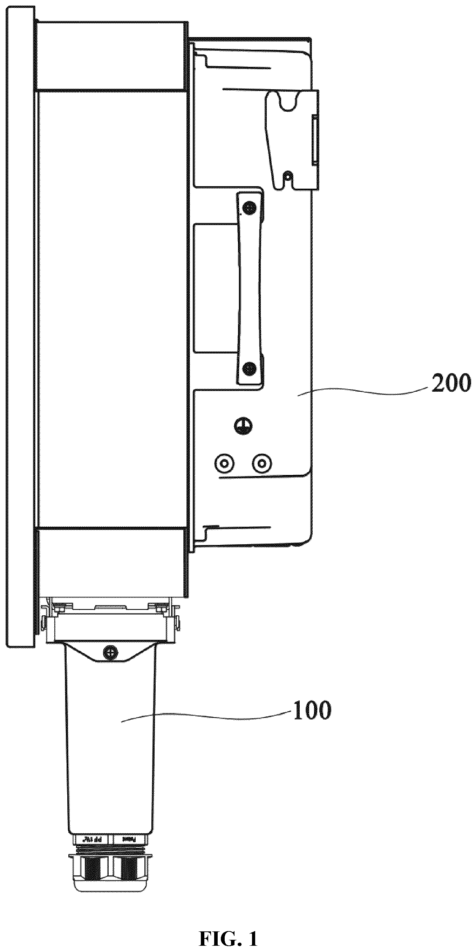

As shown in Fig. 1, this embodiment provides an inverter that includes an inverter body 200 and a junction box 100. The inverter body 200 is configured for converting direct current into alternating current. The junction box 100 is provided on the inverter body 200, and configured for electrically connecting a cable on the alternating current side of the inverter body 200 to an external component, thereby playing a certain role in protecting the cable.

The existing junction box 100 is fixed to the inverter body 200 by means of bolt connection or snap connection, and the installation or detachment of the junction box 100 with respect to the inverter body 200 requires a certain installation space, so that it is difficult to install or detach the junction box 100 in a narrow space.

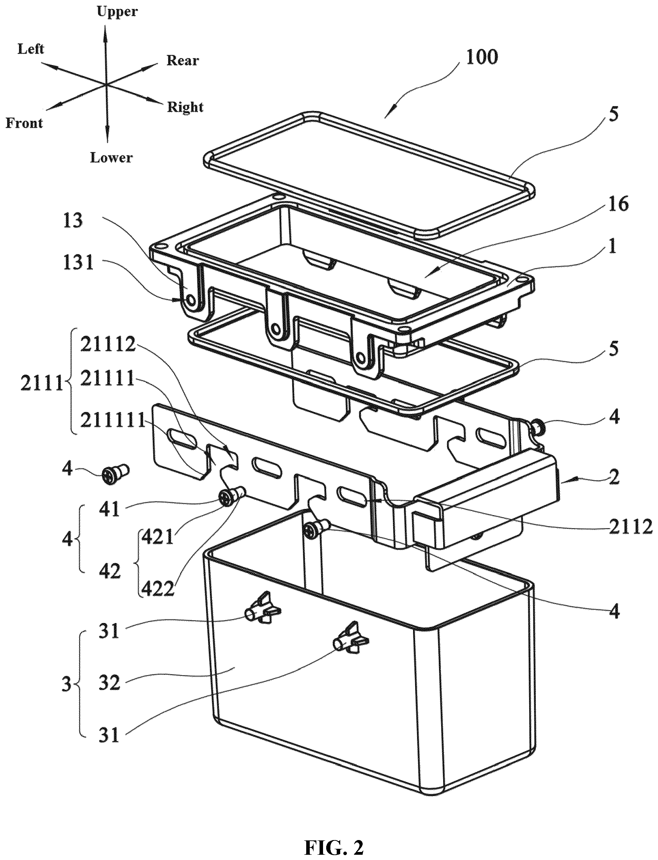

To solve the above problems, as shown in Fig. 2, this embodiment provides a junction box 100 that includes a base 1 and a box body 3. The base 1 may be mounted on the inverter body 200. A through hole 16 which is through from top to bottom is provided in the center of the base 1, so that the cable to be connected can pass therethrough. An opening is provided at one end of the box body 3, and an end of the opening is connected to the base 1. The box body 3 provides a storage and connection space for the cable passing through the base 1, thus playing the role of protecting and connecting the cable.

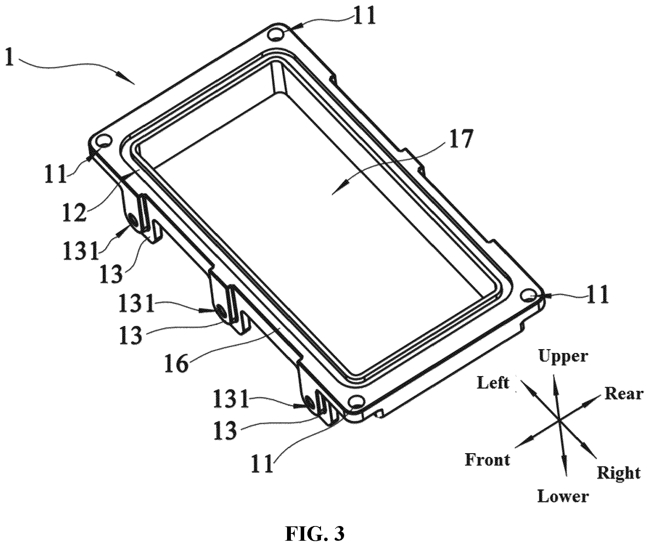

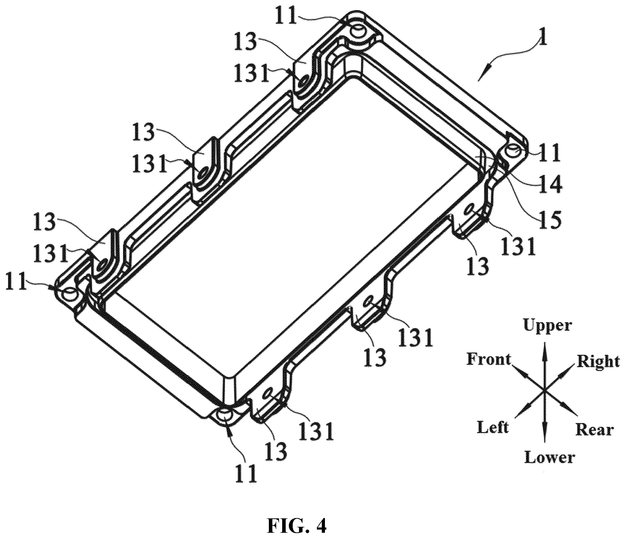

In order to ensure that the wiring terminal mounted in the junction box 100 is not affected by water and dust, as shown in Fig. 2 and Fig. 3, the junction box 100 in this embodiment further includes a sealing ring 5. As shown in Fig. 3, a first annular sealing groove 12 is provided on an upper end face of the base 1, and the sealing ring 5 is placed in the first annular sealing groove 12. When the base 1 is fixed to the inverter body 200, the inverter body 200 presses against the sealing ring 5 in the first annular sealing groove 12, thus achieving the sealing between the base 1 and the inverter body 200. As shown in Fig. 4, a second annular sealing groove 15 is provided in a lower end face of the base 1, and another sealing ring 5 is also placed in the second annular sealing groove 15. When the open end of the box body 3 is connected to the base 1, the box body 3 presses against the sealing ring 5 in the second annular sealing groove 15, thus achieving the sealing between the box body 3 and the base 1. Since the sealing ring 5 is provided between the base 1 and the inverter body 200, and another sealing ring 5 is also provided between the base 1 and the box body 3, the whole junction box 100 can be sealed, and further be waterproof and dustproof.

In other embodiments, the second annular sealing groove 15 may also be provided in the upper end face of the box body 3, and the sealing ring 5 is placed in the second annular sealing groove 15. When the open end of the box body 3 is connected to the base 1, the base 1 presses against the sealing ring 5 in the second annular sealing groove 15, so that the sealing between the box body 3 and the base 1, as well as the dustproof and waterproof performance, can be achieved.

In order to facilitate the installation of the box body 3 on the base 1, as shown in Fig. 3 to Fig. 4, a guide wall 14 is provided on the circumference of the lower end face of the base 1, and an inner wall of the open end of the box body 3 is fittingly sleeved outside the guide wall 14. The guide wall 14 provides guidance for the installation of the box body 3 and the base 1, and ensures that the box body 3 is mounted at an accurate position without being skewed.

In order to fix the base 1 on the inverter body 200, as shown in Fig. 3, several base mounting holes 11 are provided on the upper end face of the base 1. Fasteners such as bolts can pass through the base mounting holes 11 to fix the base 1 to the inverter body 200. Further, multiple base mounting holes 11 are provided, and the multiple base mounting holes 11 are spaced apart on the base 1, so that the base 1 is more stably installed on the inverter body 200. Optionally, one base mounting hole 11 is provided at each corner of the base 1. In this way, the reliability of the installation of the base 1 can be ensured with the lowest cost.

In order to obtain more functions, it is required to connect various electrical devices having different functions through cables, which leads to an increase in the demand for the junction box 100 and a gradual decrease in the wiring space. There is an existing type of junction box 100 of which the box body 3 is screwed to the base 1. This type of junction box requires a large space for detachment and installation, and it is also inconvenient to detach or install this type of junction box. There is another type of junction box 100 of which the box body 3 is fixed to the base 1 by means of a rotary buckle. Although it is more convenient than the previous one, the rotation of the buckle requires a larger space, and it is difficult to extract and fix the junction box 100 when the junction box is used in a relatively narrow space.

In order to solve the above problems, as shown in Fig. 2, the junction box 100 provided in this embodiment further includes a locking assembly 2. The locking assembly 2 is sleeved on the base 1 and is slidably connected to the base 1. The locking assembly 2 is provided with a guide clamping groove 2111 that is able to slide laterally along the box body 3 (in the left-right direction in Fig. 2), so as to clamp the box body 3 into the guide clamping groove 2111. When installing the box body 3, the operator only needs to move the box body 3 upwardly, and ensure that the box body 3 passes through the guide clamping groove 2111 and is connected to the lower end face of the base 1, and then push the locking assembly 2 to a first position in the left-right direction, so that the box body 3 can be clamped and fixed by the guide clamping groove 2111, thus firmly fixing the box body 3 to the base 1. When detaching the box body 3, the operator only needs to move the locking assembly 2 reversely to a second position in the left-right direction to unlock the box body 3, and then move the box body 3 downwardly along the guide clamping groove 2111 and away from the base 1, so that the box body 3 is detached from the base 1. The junction box 100 in the above form does not require too much operation space to achieve the installation and detachment of the box body 3 and the base 1. Further, it has a simple structure, and is easy to operate.

Further, as shown in Fig. 2, a clamping post 31 is provided on the box body 3, and the clamping post 31 is able to move along the guide clamping groove 2111. The guide clamping groove 2111 is L-shaped, and the guide clamping groove 2111 includes a guide portion 21111 and a clamping portion 21112 that are communicated with each other. Specifically, the guide portion 21111 extends in the up-down direction, and the clamping portion 21112 extends in the left-right direction. The guide portion 21111 is able to guide the clamping post 31 to move in the up-down direction to realize the connection and separation between the box body 3 and the base 1. The clamping portion 21112 is able to move in the left-right direction with respect to the clamping post 31, so that the clamping post 31 slides within the clamping portion 21112, further realizing the fixation and detachment of the clamping post 31 in the guiding clamping groove 2111. When the box body 3 is installed, the clamping post 31 is moved along the guide portion 21111 until the box body 3 is connected to the base 1. At this time, the clamping post 31 is located at a junction between the guide portion 21111 and the clamping portion 21112. Then, the locking assembly 2 is moved in the left-right direction, so that the clamping post 31 slides into the clamping portion 21112 and further slides within the clamping portion 21112 until the locking assembly 2 is in the first position. At this time, the clamping post 31 is far away from the guide portion 21111 and cannot move in the up-down direction, that is, the box body 3 is locked to the base 1. When the box body 3 is detached, the locking assembly 2 is moved to the second position in the left-right direction, and at the same time, the clamping post 31 slides within the clamping portion 21112 to the junction between the guide portion 21111 and the clamping portion 21112. At this time, the clamping post is able to move downwardly along the guide portion 21111 to move the box body 3 away from the base 1 until the clamping post 31 is separated from the guide portion 21111, that is, the box body 3 is detached. Therefore, the junction box 100 provided in this embodiment can achieve the installation and detachment of the box body 3 in a narrow space. The junction box does not require too much installation space, has a simple structure, and is easy to operate.

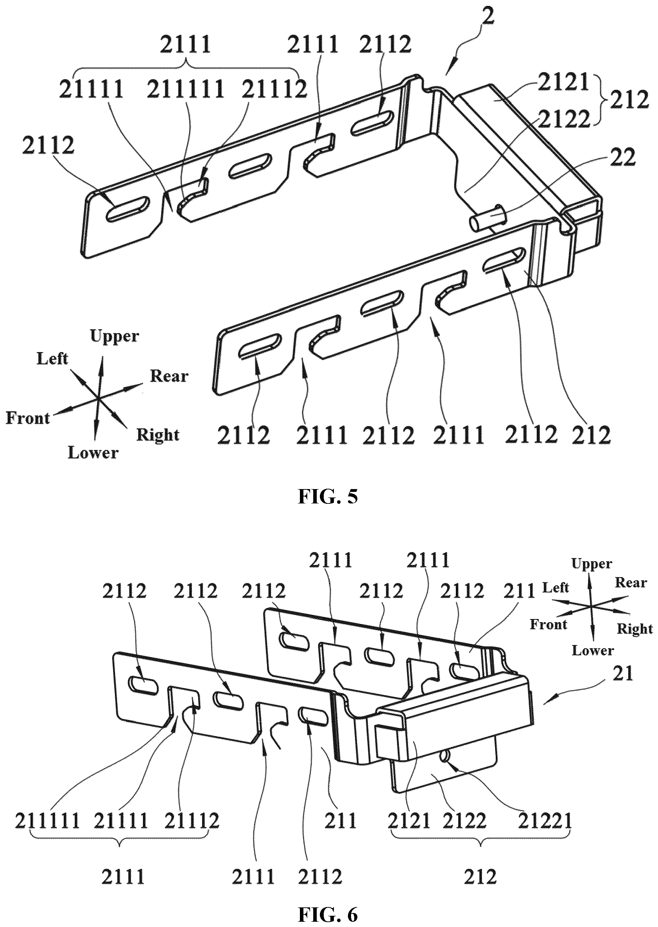

In an embodiment, in order to make it easier for the clamping post 31 to enter the guide portion 21111, as shown in Fig. 5, an inclined guide surface 211111 is provided on each one of the left and right sides of the opening of the guide portion 21111, so that the opening of the guide portion 21111 has a flare shape. When the box body 3 is mounted, the clamping post 31 is able to enter the guide portion 21111 without particularly accurate alignment of the box body 3 due to the existence of the inclined guide surface 211111.

Further, as shown in Fig. 5, the inclined guide surface 211111 is also provided at the joint between the guide portion 21111 and the clamping portion 21112, which assists the clamping post 31 to slide into the clamping portion 21112 from the guide portion 21111.

In this embodiment, the opening of the guide portion 21111 and the joint between the guide portion 21111 and the clamping portion 21112 are each provided with the inclined guide surface 211111. In other embodiments, the inclined guide surface 211111 may be provided at the joint between the guide portion 21111 and the clamping portion 21112 only, as long as it can assist the clamping post 31 to enter the guide portion 21111 and slide along the guide clamping groove 2111.

As a preferred embodiment, as shown in Fig. 2, the locking assembly 2 is provided with a mounting slide groove 2112 that extends in the left-right direction. The junction box 100 further includes a fastener 4, and the fastener 4 is able to pass through the mounting slide groove 2112 so as to slidably connect the locking assembly 2 to the base 1. Provision of the mounting slide groove 2112 ensures that the fastener 4 slides within the mounting slide groove 2112, while the locking assembly 2 moves with respect to the base 1, so that the locking assembly 2 is able to slide with respect to the base 1. Specifically, the base 1 is provided with a side mounting hole 131 connected to the locking assembly 2, and the fastener 4 passes through the mounting slide groove 2112 and is fixedly connected to the side mounting hole 131, thereby connecting the locking assembly 2 to the base 1.

The specific structure of the fastener 4 is now described with reference to Fig. 2. As shown in Fig. 2, the fastener 4 includes a limit portion 41 and a lead portion 42 that are connected to each other. The lead portion 42 is led through the mounting slide groove 2112 and screwed into the side mounting hole 131. The limit portion 41 abuts against an outer wall of the locking assembly 2, so that the limit portion 41 can prevent the locking assembly 2 from being separated from the base 1. Specifically, the lead portion 42 includes a sliding portion 421 and a connecting portion 422. Optionally, the connecting portion 422 is provided with threads. One end of the sliding portion 421 is connected to the connecting portion 422, and the other end of the sliding portion 421 is connected to the limit portion 41. The lead portion 42 is first led through the mounting slide groove 2112 and then screwed into the side mounting hole 131, and the sliding portion 421 is located in the mounting slide groove 2112. It is ensured that when the mounting slide groove 2112 follows the locking assembly 2 to move in the left and right direction with respect to the base 1, the sliding portion 421 of the fastener 4 fixed to the base 1 is able to slide within the mounting slide groove 2112, so that the locking assembly 2 is able to slide with respect to the base 1.

The locking assembly 2 is described below in conjunction with Fig. 5 and Fig. 6. As shown in Fig. 5 and Fig. 6, the locking assembly 2 includes a locking member 21. The locking member 21 includes two opposite side plates 211 and a connecting plate 212. Two ends of the connecting plate 212 are respectively connected to an end of each of the two side plates 211. The locking member 21 is sleeved on the base 1. The box body 3 is located between the two side plates 211 when mounted on the base 1. Each of the two side plates 211 is provided with the guide clamping groove 2111, and correspondingly, each of the left and right sides of the box body 3 is provided with the clamping post 31, so that the box body 3 slides more smoothly along the guide clamping groove 2111, and the guide clamping groove 2111 locks the box body 3 more stably and reliably. In addition, each of the two side plates 211 is provided with the mounting slide groove 2112, so that the locking assembly 2 slides more smoothly when sliding with respect to the base 1.

Further, as shown in Fig. 6, multiple mounting slide grooves 2112 are provided, and the multiple mounting slide grooves 2112 are spaced apart on the side plate 211. Optionally, each side plate 211 is provided with three mounting slide grooves 2112, which can realize that the locking assembly 2 does not skew when moving in the left-right direction with respect to the base 1, and can further improve the stability of the locking assembly 2 when it slides with respect to the base 1.

Further, as shown in Fig. 6, multiple guide clamping grooves 2111 are provided, and the multiple guide clamping grooves 2111 are spaced apart on the locking assembly 2, which further improves the stability of the box body 3 sliding along the guide clamping groove 2111, and also improves the stability of mounting of the box body 3 and the base 1. Optionally, each side plate 211 is provided with two guide clamping grooves 2111, and each guide clamping groove 2111 is located between two adjacent mounting slide grooves 2112.

Further, as shown in Fig. 4, corresponding to the mounting slide grooves 2112, each of the front and rear sides of the base 1 is provided with multiple locking assembly mounting portions 13 that are arranged in the left-right direction. Each locking assembly mounting portion 13 is provided with the side mounting hole 131, which improves the connection strength between the locking assembly 2 and the base 1. Further, a stepped surface having a smaller area is provided on the outer side of each locking assembly mounting portion 13, and an end face of the stepped surface abuts against an inner wall of the side plate 211. Such arrangement reduces the contact area between the base 1 and the locking assembly 2, and thereby reduces the friction between the locking assembly 2 and the base 1 when the locking assembly is switched between the first position and the second position, so that the operator can move the locking assembly 2 with less force. Further, the stepped surface is provide with the side mounting hole 131, and an internal thread matched with the connecting portion 422 is provided within the side mounting hole 131, so that the fastener 4 can be led through the locking assembly 2 and be screwed to the base 1.

In order to further improve the stability of clamping and fixation of the box body 3 and the locking assembly 2, as shown in Fig. 5, the locking assembly 2 further includes a fixing member 22. The lower end of the connecting plate 212 extends downwardly along the lower end portion that is flush with the side plate 211 to form an extension portion 2122. The extension portion 2122 is provided with a fixing member mounting hole 21221. When the locking member 21 is in the second position, the fixing member 22 fastens the locking assembly 2 to the box body 3 through the fixing member mounting hole 21221. Specifically, the fixing member 22 is a screw, and the unlocking of the box body 3 and the locking assembly 2 can be achieved by screwing the screw, so that it is convenient for the operator to detach or install the box body 3.

In order to make it convenient for the operator to move the locking assembly 2 in the left-right direction, as shown in Fig. 6, a handle 2121 is provided on the connecting plate 212. Optionally, the handle 2121 is integrated with the connecting plate 212 and formed by stamping. Compared with the handle 2121 being separately mounted on the connecting plate 212, the integrally formed handle 2121 reduces the number of parts and has a higher strength. The end portions of the side plates 211 on the left and right sides of the handle 2121 are respectively abutted against the connecting plate 212, and welded and fixed to the connecting plate 212, so that the strength of the handle 2121 is further improved.

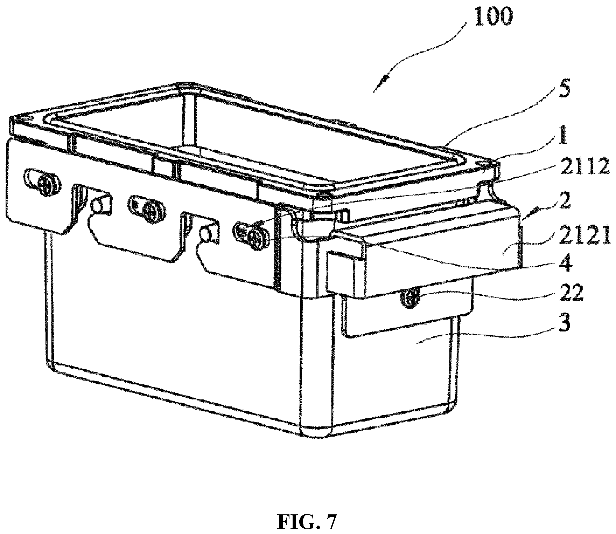

In order to more clearly clarify the design principle of the junction box 100 of the this embodiment, the installation process of this embodiment, as shown in Figs. 2-4 and Fig. 7, is described below with reference to Fig. 7.

Firstly, the locking assembly 2 is moved in the left-right direction through the handle 2121, so that all fasteners 4 are located at the same side of the mounting slide grooves 2112;

Secondly, the box body 3 slides along the guide clamping groove 2111 until the box body 3 moves along the guide wall 14 to press and compress the sealing ring 5 within the second annular sealing groove 15;

Thirdly, the locking assembly 2 is moved reversely in the left-right direction, and the box body 3 is firmly clamped by the guide clamping groove 2111;

Fourthly, the locking assembly 2 is fixed to the box body 3 through the fixing member 22 finally. Through the above steps, the installation of the junction box 100 is completed.

### Second Embodiment

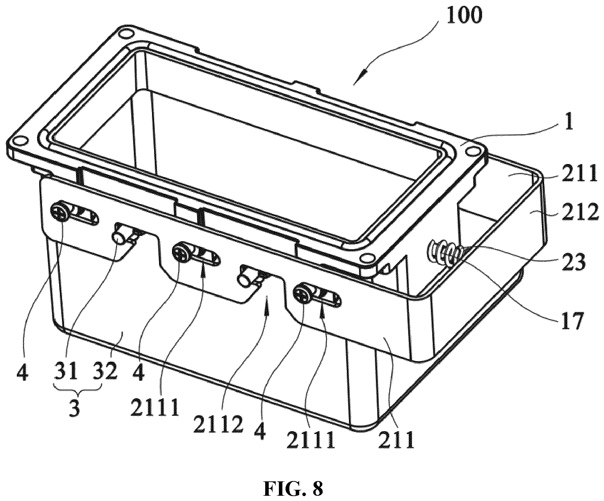

This embodiment provides a junction box 100, as shown in Fig. 8, which is substantially the same as the junction box 100 provided in the first embodiment. The only difference is that the locking assembly 2 further includes a reset member 23, and the two ends of the reset member 23 abut against the base 1 and the locking member 21 respectively. Optionally, the reset member 23 is an elastic member which can reset the locking assembly 2 by its own elastic force to lock the box body 3.

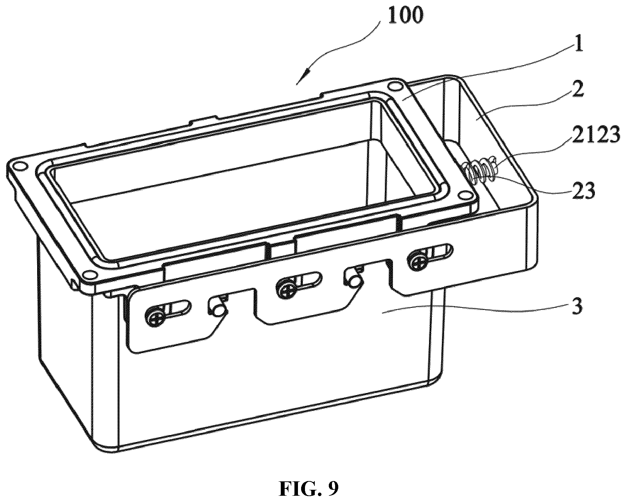

Further, as shown in Fig. 8 and Fig. 9, a second clamping post 2123 is provided on a surface, facing toward the base 1, of the connecting plate 212, and it extends towards the base 1. One end of the reset member 23 is clamped to the second clamping post 2123 to ensure the connection between the reset member 23 and the locking member 21. One end of the base 1 facing toward the connecting plate 212 extends downwardly to form a reset member mounting surface. A first clamping post 17 is provided on the reset member mounting surface, and it extends toward the connecting plate 212. The other end of the reset member 23 is clamped to the first clamping post 17 to ensure the connection with the base 1, so that the reset member 23 does not separate from the locking assembly 2 or the base 1 when the locking assembly 2 is moved in the left-right direction with respect to the base 1.

In order to better illustrate the design principle of the reset member 23 of this embodiment, the following is an explanation of the installation steps that are different from those of the first embodiment.

When the box body 3 is mounted, the locking assembly 2 is pressed inward/pulled outward to make the reset member 23 to be in a compressed/stretched state. After the box body 3 presses the sealing ring 5 until the sealing ring 5 is compressed, the locking assembly 2 is released, and the reset member 23 drives the locking assembly 2 to reset under its own elastic force, so that the clamping post 31 is clamped into the clamping portion 21112 of the guide clamping groove 2111, and the installation of the box body 3 is achieved.

Obviously, the above embodiments of the present application are merely examples for clearly illustrating the present application, and are not intended to limit the implementations of the present application. For those of ordinary skill in the art, various obvious changes, modifications and substitutions can be made without departing from the protection scope of the present application. It is unnecessary and impossible to exhaustively list all the implementations here. Any modification, equivalent substitution and improvement made within the spirit and principle of the present application are deemed to fall into the protection scope of claims of the present application.

## Claims

1. A junction box, comprising:
a base (1);
a box body (3) provided with a clamping post (31); and
a locking assembly (2) slidably connected to the base (1), wherein the locking assembly (2) is provided with a guide clamping groove (2111), and the locking assembly (2) is slidable laterally along the box body (3), so as to clamp the box body (3) into the guide clamping groove (2111).

2. The junction box according to claim 1, wherein the guide clamping groove (2111) is L-shaped, and the guide clamping groove (2111) comprises a guide portion (21111) and a clamping portion (21112), wherein the guide portion (21111) and the clamping portion (21112) communicated with each other, wherein the clamping post (31) is configured to pass through the guide portion (21111) and be clamped into the clamping portion (21112).

3. The junction box according to claim 1, wherein a plurality of the guide clamping grooves (2111) are provided, and the plurality of the guide clamping grooves (2111) are spaced apart on the locking assembly (2).

4. The junction box according to claim 2, wherein an inclined guide surface (211111) is provided at an opening of the guide portion (21111) and/or at a joint between the guide portion (21111) and the clamping portion (21112).

5. The junction box according to claim 1, wherein the locking assembly (2) is further provided with a mounting slide groove (2112) that extends laterally along the box body (3);
the junction box further comprises
a fastener (4) that is configured to pass through the mounting slide groove (2112) so as to slidably connect the locking assembly (2) to the base (1).

6. The junction box according to claim 5, wherein a plurality of the mounting slide grooves (2112) are provided, and the plurality of the mounting slide grooves (2112) are spaced apart on the locking assembly (2).

7. The junction box according to claim 1, wherein the locking assembly (2) comprises
a locking member (21), and
a reset member (22),
wherein the locking member (21) is provided with the guide clamping groove (2111); and
one end of the reset member (22) is connected to the locking member (21), and the reset member (22) is configured to reset the locking member (21), so as to clamp the box body (3) into the guide clamping groove (2111).

8. The junction box according to claim 7, wherein the locking member (21) comprises two opposite side plates (211) and a connecting plate (212), wherein two ends of the connecting plate (212) are respectively connected to an end of each of the two side plates (211), and the box body (3) is located between the two side plates (211), wherein each of the two side plates (211) is provided with the guide clamping groove (2111), and two ends of the reset member (22) are respectively connected to the connecting plate (212) and the base (1).

9. The junction box according to claim 7, wherein the locking assembly (2) further comprises
a fixing member (23) that is configured for fixing the locking member (21) to the box body (3) when the box body (3) is clamped into the guide clamping groove (2111).

10. The junction box according to any one of claims 1 to 9, wherein the locking assembly (2) is provided with a handle (2121).

11. The junction box according to claim 1, further comprising a sealing ring (5), wherein a first annular sealing groove (12) is provided on an upper end face of the base (1), and a second annular sealing groove (15) is provided on one of a lower end face of the base (1) and an upper end face of the box body (3), and the sealing ring (5) is placed in the first annular sealing groove (12) and the second annular sealing groove (15);
when the base (1) is fixed at an installation position, the base (1) presses against the sealing ring (5) in the first annular sealing groove (12); and
when the box body (3) is clamped into the guide clamping groove (2111), the box body (3) presses against the sealing ring (5) in the second annular sealing groove (15).

12. The junction box according to claim 11, wherein the base (1) is provided with a guide wall (14) in a circumferential direction, and the guide wall (14) is configured to guide the box body (3) to press against the sealing ring (5).

13. An inverter, comprising an inverter body (200), wherein the inverter further comprises the junction box according to any one of claims 1 to 12, and the junction box is provided on the inverter body (200).
